# EUROPEAN PATENT APPLICATION

(11) **EP 3 925 485 A1**
(43) Date of publication of application: **22.12.2021**
(21) Application number: 19915025.1
(22) Date of filing: 19.08.2019
(51) Int. Cl.: A47B 13/08, A47B 3/083, A47B 3/00

(54) **COMPOSITE PANEL AND DESK HAVING SAME**

(30) Priority: 15.02.2019 CN 201910115646
(71) Applicant: New-Tec Integration (Xiamen) Co., Ltd., Xiamen, Fujian 361100 (CN)
(72) Inventor: LENG, Luhao, Xiamen, Fujian 361005 (CN)
(74) Representative: Plasseraud IP
(86) International application number: PCT/CN2019/101382
(87) International publication number: WO 2020/164235

(57) **Abstract**

A composite board and a table including a table board made of the composite board are disclosed. The composite board comprises: a bottom sheet (1524) having a bottom sheet channel (1540) formed on a periphery of the bottom sheet (1524), a bottom sheet lip (1548) perpendicular to an outer wall (1546) of the bottom sheet channel (1540) being formed on a top of the outer wall (1546) and extending outwards; a top sheet (1530) having a top sheet lip (1554) formed on a periphery of the top sheet (1530), the top sheet lip (1554) being parallel to and overlying on the bottom sheet lip (1548); a reinforcement member(1526) being located in the bottom sheet channel (1540) and engaging the top sheet (1530); and an edging member (1528) having a first arm (1560) and a second arm (1562) which are integrated with each other, the edging member extending substantially around the entire periphery of the composite board and clamping the bottom sheet lip (1548) and the top sheet lip (1554) together by the first arm (1560) and the second arm (1562).

## Description

### FIELD

The present disclosure generally relates to various types of furniture boards, in particular to a composite board of a table and a table having the same.

### BACKGROUND

Boards are commonly used materials for manufacturing furniture, such as boards for desks, coffee tables, storage chests, or the like. The prior art furniture boards are traditionally made of wood. Wood boards have the following disadvantages: first, consumption of large amount of wood is not environmentally friendly; second, wood needs constant maintenance; and third, wood may not be suitable in some applications. Wood substitutes such as fiberboard or flake board may also share similar defects.

To meet the needs of a modern household, furniture boards need to be tough, durable, lightweight and appealing. As consumers look for more environment friendly alternatives, there are more and more furniture boards made of synthetic materials.

A blow molding process is conventionally employed in the process of manufacturing composite boards, which is a process for manufacturing hollow plastic parts, including the steps of melting plastic and then shaping the melted plastic into a parison or preform. The parison is typically a tubular plastic part having a hole at one end, through which compressed air can pass. For a table board which generally has a large size, a large blow molding machine may be required. In addition, the table board usually has a sufficient thickness to provide a required strength. In the circumstance, a large amount of material may be used to produce table boards, which results in that the formed boards are cumbersome. For the existing composite table boards, an adhesive is also used to connect with the top sheet, bottom sheet, and inner reinforcement members. However, it is difficult to guarantee that an appropriate amount of the adhesive is applied at an appropriate position during manufacturing, thereby resulting in formation of flawed products. For example, the adhesive is wrongly applied, exposed, or failed. Further, the existing composite table boards only have a bearable appearance and exhibits an unsatisfactory performance in sealing, which cannot effectively prevent the metal reinforcement members inside from rusting.

As a result, there is a need for an improved composite furniture board formed of a synthetic material, which can achieve improvements in mechanical performance, sealing performance, effective use area, and appearance.

### SUMMARY

To solve the above-mentioned problems existed in the prior art, the present disclosure provides an improved composite board.

In an aspect of the present disclosure, there is provided a composite board, comprising:
a bottom sheet having a bottom sheet channel formed along a periphery of the bottom sheet, and a bottom sheet lip formed on a top of an outer wall of the bottom sheet channel, the bottom sheet lip being perpendicular to the outer wall of the bottom sheet channel and extending outwards;
a top sheet having a top sheet lip formed along a periphery of the top sheet, the top sheet lip overlying the bottom sheet lip in parallel;
a reinforcement member located in the bottom sheet channel and engaging with the top sheet; and
an edging member having a first arm and a second arm which are formed integrally, the edging member extending substantially around an entire periphery of the composite board and clamping the bottom sheet lip and the top sheet lip together by the first arm and the second arm.

According to an embodiment of the present disclosure, the reinforcement member is formed as a rectangular metal tube.

According to an embodiment of the present disclosure, an upper surface of the top sheet lip is lower than an upper surface of the top sheet.

According to an embodiment of the present disclosure, an upper surface of the first arm is coplanar with an upper surface of the composite board.

According to an embodiment of the present disclosure, a stepped portion protruding downwards is formed at the outer side of at least a part of the bottom sheet channel.

According to an embodiment of the present disclosure, a length (LL) of the top sheet lip and the bottom sheet lip is equal to a length of the first arm and the second arm.

According to an embodiment of the present disclosure, a width of the reinforcement member is greater than the length (LL) of the top sheet lip and the bottom sheet lip.

According to an embodiment of the present disclosure, a width of the stepped portion is equal to the length (LL) of the top sheet lip and the bottom sheet lip

According to an embodiment of the present disclosure, one or more ridges or protrusions are formed on opposing surfaces of the first arm and the second arm.

According to an embodiment of the present disclosure, a pattern of protrusions is formed on the bottom sheet, an upper surface of each of the protrusions engages a lower surface of the top sheet.

According to an embodiment of the present disclosure, the bottom sheet and the top sheet are formed of plastics, and the reinforcement member and the edging member are formed of metal.

According to an embodiment of the present disclosure, the edging member is formed of aluminum.

According to an embodiment of the present disclosure, the protrusions of the bottom sheet are formed via a vacuum forming process.

In another aspect of the present disclosure, there is provided a table, comprising:
a composite board, comprising:
a bottom sheet having a bottom sheet channel formed along a periphery of the bottom sheet, wherein a bottom sheet lip is formed on a top of an outer wall of the bottom sheet channel, and the bottom sheet lip is perpendicular to the outer wall of the bottom sheet channel and extends outwards;
a top sheet having a top sheet lip formed along a periphery of the top sheet, the top sheet lip overlying the bottom sheet lip in parallel;
a tubular metal reinforcement member having an lower end located in the bottom sheet channel and an upper end engaging with the top sheet, wherein an outer wall of the channel engages a side of the tubular metal reinforcement member;
an edging member having a first arm and a second arm which are formed integrally, wherein the edging member extends substantially around an entire periphery of the composite board and clamps the bottom sheet lip and the top sheet lip together by the first arm and the second arm; and
a table leg assembly pivotably coupled to the tubular metal reinforcement member.

In a further aspect of the present disclosure, there is provided a method of manufacturing a composite board, comprising steps of:
placing a lower end of a tubular metal reinforcement member into a channel of a bottom sheet;
placing a top sheet on a top of the tubular metal reinforcement member with a lip of the top sheet engages a lip of the bottom sheet in parallel;
positioning an edging member around the lip of the top sheet and the lip of the bottom sheet such that a first arm of the edging member is located below the lip of the bottom sheet, and a second arm of the edging member is located above the lip of the top sheet; and
compressing the first arm and the second arm towards each other and permanently deforming the edging member, such that the edging member clamps the lip of the top sheet against the lip of the bottom sheet, and the edging member extends around an entire periphery of the composite board.

According to an embodiment of the present disclosure, the method further comprises a step of attaching the lip of the top sheet to the lip of the bottom sheet prior to the compressing step.

As compared with the prior art, the composite furniture board according to the present disclosure has the following advantages: having a simple structure, thinner thickness, a light weight, a high strength with lower costs, and being easy for manufacturing, appealing , having a larger effective use area, and the like.

### BRIEF DESCRIPTION OF THE DRAWINGS

For better understanding on the above and other objectives, features, advantages, and functions of the present disclosure, the preferred embodiments are provided with reference to the drawings. The same reference numbers refer to the same components throughout the drawings. It would be appreciated by those skilled in the art that the drawings are merely provided to illustrate preferred embodiments of the present disclosure, without suggesting any limitation to the protection scope of the present application, and respective components therein are not necessarily drawn to scale.
Fig. 1 is a perspective view of a composite board according to a preferred embodiment of the present disclosure, where the board is partially cutaway for better illustration of the board structure.
Fig. 2 is a partial enlarged view of the board as shown in Fig. 1.
Fig. 3 is an exploded view of the board as shown in Fig. 1.
Figs. 4A-4C are sectional views illustrating a process of clamping a top board and a bottom board via an edging member.
Fig. 5 is a top perspective view of a table having the composite board according to the present disclosure.
Fig. 6 is a bottom perspective view of the table as shown in Fig. 5.

### DETAILED DESCRIPTION OF EMBODIMENTS

Reference will now be made to the drawings to describe in detail the composite board according to the present disclosure. What will be described herein only involve preferred embodiments of the present disclosure, other manners would be envisioned by those skilled in the art on the basis of the preferred embodiments of the present disclosure, which also fall into the scope of the present disclosure.

According to a preferred embodiment of the present disclosure, a composite furniture board may be a composite table board as a tabletop. The composite table board includes a bottom sheet, a top sheet, a reinforcement member located between the bottom sheet and the top sheet, and an edging member for clamping and securing the bottom sheet and the top sheet.

The bottom sheet may be manufactured via a vacuum forming process. In the bottom sheet, top surfaces of protrusions formed via the vacuum forming process are configured to engage the top sheet and affect stiffness or rigidity of the top sheet. The larger the total area of the top surfaces of the protrusions is, the greater the force for supporting the top sheet is, such that the top sheet has a greater stiffness or rigidity. However, on the other hand, a larger total area of the top surfaces of the protrusions indicates a smaller area of the other part of the bottom sheet, which may reduce the stiffness or rigidity of the bottom sheet. Therefore, the total area of the top surfaces of the protrusions is typically 30%-70% of the area of the bottom sheet to reach a balance between the top sheet and the bottom sheet in stiffness or rigidity.

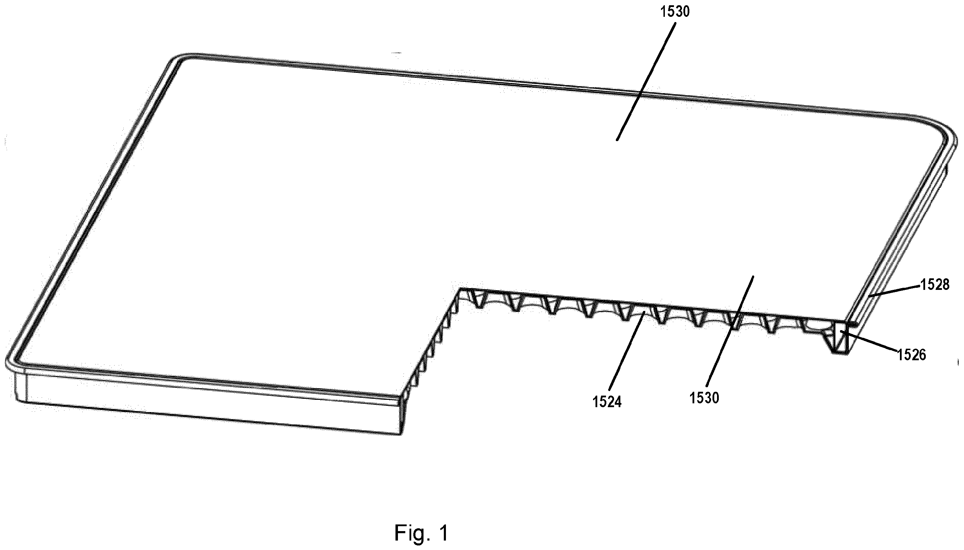

Figs. 1-6 illustrate a composite table board and a table having a tabletop formed by the composite table board.

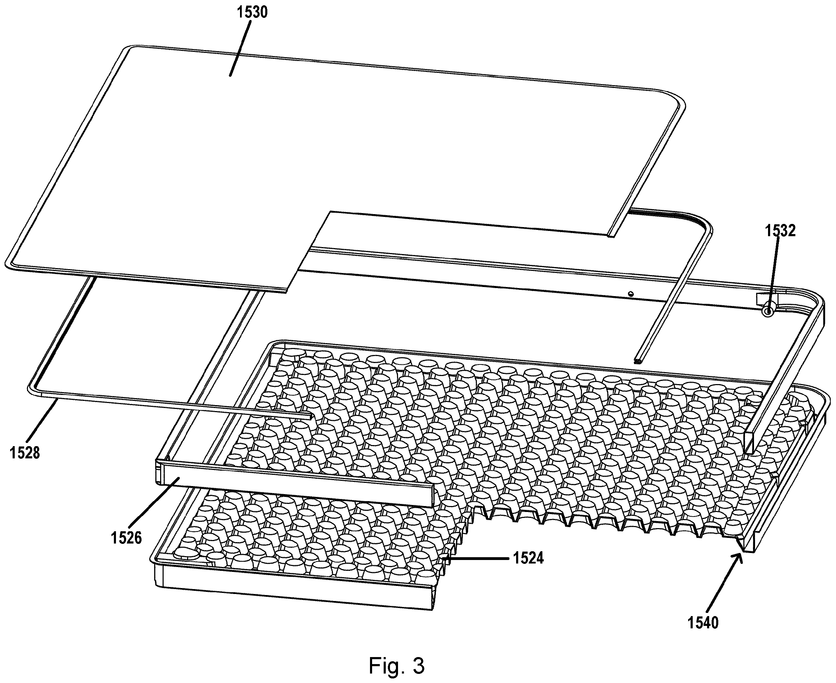

Fig. 1 illustrates a composite table board according to a preferred embodiment of the present disclosure, where the table board is partially cutaway for the purpose of clear illustration. Fig. 3 is an exploded view of the table board as shown in Fig. 1. As shown in Figs. 1 and 3, the composite table board according to the present disclosure includes a bottom sheet 1524, a reinforcement member 1526, a top sheet or panel 1530, and an edging member 1528. The reinforcement member 1526 may be formed asa rectangular metal tube. The reinforcement member 1526 extends around a periphery of the composite table board and is bent at corners of the table board. The reinforcement member may be an integral member or comprises a plurality of tube sections. The top sheet 1530 may be metallic (e.g. aluminum) or plastic.

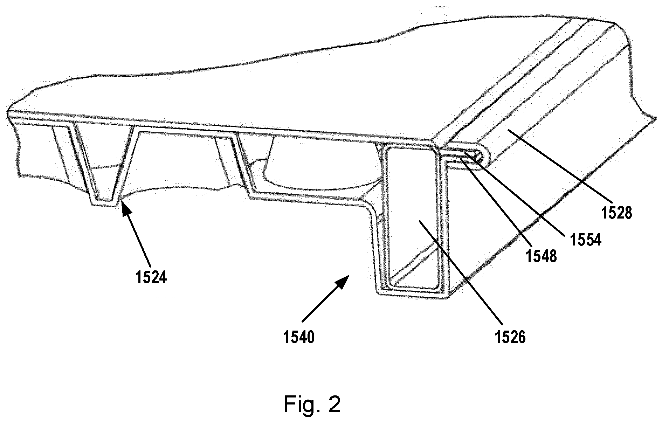

Fig. 2 is a partial enlarged view of the table board in Fig. 1. As shown therein, the bottom sheet 1524 includes a channel 1540 formed around its periphery. The channel may be of any shape including the rectangular shape in section. The top surfaces of the protrusions formed on the bottom sheet 1524 engage the lower surface of the top sheet 1530 to support the latter. The reinforcement member 1526 (e.g., the rectangular steel tube) is located in the channel 1540 to reinforce the rigidity of the entire composite board.

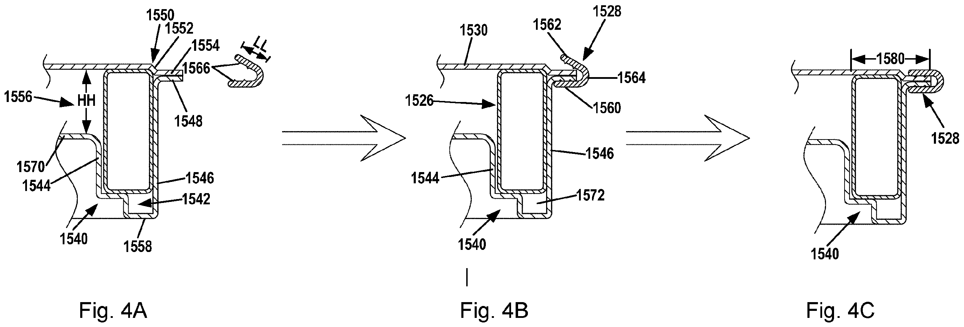

Further, Figs. 4A-4C are partial sectional views of a composite board according to an alternative embodiment. As shown therein, a stepped portion 1542 protruding downwards is formed optionally in the channel 1540 at the long sides of the bottom sheet 1524, and the reinforcement member 1526 is located above the stepped portion 1524. A vertical surface 1544 extends upwards from the channel 1540 to an internal bottom surface 1570 of the bottom sheet 1524. A gap 1556 having a height HH is formed between the internal bottom surface 1570 and the lower surface of the top sheet 1530. The bottom surface 1558 of the stepped portion is spaced apart from the reinforcement member 1526 via a bottom gap 1572 formed between the stepped portion 1542 and an outer wall 1546 of the channel 1540. The stepped portion 1542 is advantageous for increasing the height and thus the bending moment of inertia of the channel 1540 on the long sides. The increased height of the stepped portion 1542 may also provide space for accommodating a foldable table leg assembly. Alternatively, the stepped portion 1542 may be formed on the short side of the bottom sheet.

Still referring to Figs. 4A-4C, the periphery around the top sheet 1530 may be preferably formed with a stepped portion 1550. The stepped portion 1550 may be formed during the compressing and clamping process with the edging member. The stepped portion comprises an angled portion 1552 such that an upper surface of a lip 1554 at the periphery of the top sheet 1530 is slightly lower than the upper surface of the main body of the top sheet, where a height difference therebetween may be substantially equal to a thickness of an arm of the edging member 1520. In this way, when the edging member 1520 clamps on the lip 1554 of the top sheet 1530 and a lip 1548 of the bottom sheet 1524, the upper surface of the edging member 1520 is substantially flush with the tabletop (i.e., the upper surface of the top sheet 1530). The edging member may be used as an extension of the tabletop to enlarge the effective use area of the tabletop. The bottom sheet lip 1548 perpendicular to the outer wall 1546 is in contact with and parallel to the top sheet lip 1554. As shown in Figs. 4A and 4B, the edging member 1528 includes a first or lower arm 1560 and a second or upper arm 1562, both of which are formed integrally through an arc 1564. The edging member 1528 (which may be formed by metal, such as aluminum or other ductile material) is typically U-shaped or V-shaped. Ridges or protrusions 1566 may be disposed on inner surfaces of the arms 1560 and 1562 to enhance the securing effect between the top sheet lip and the bottom sheet lip and thus prevent loosening. The edging member 1528 may extend substantially around the entire periphery of the composite table board and may be bent smoothly and tightly around the corners of the tabletop, thereby avoiding of creating sharp or discontinuous edges and thus obtaining an aesthetic appearance, and improving the reliability of the attachment of the edging member 1528. The first arm 1560 and the second arm 1562 have a length LL, and the top sheet lip 1554 and the bottom sheet lip 1548 have the same length LL, as shown in Fig. 4C. The length LL is typically less than a width of the reinforcement member 1526.

Figs. 4A-4C schematically illustrate a process of assembling the edging member 1528 when manufacturing the composite table board. The top sheet lip 1554 and the bottom sheet lip 1548 may be connected to each other preferably by adhering, welding, fastening, or the like, and the reinforcement member 1526 in the channel 1540 is secured between the top sheet 1530 and the bottom sheet 1524. Alternatively, the top sheet 1530 and the bottom sheet 1524 can be held by a securing means to facilitate clamping and securing of the edging member 1528.

According to a preferred embodiment of the present disclosure, the edging member 1528 is made of aluminum through a cold working process and formed in a shape fitting with the table edge. The edging member 1528 is bent into an angle of 20° to 40°, typically about 30°. During assembling of the edging member 1528, the lower arm 1560 of the edging member may be preferably first positioned below and abut against the bottom sheet lip 1548, and the upper arm 1526 then is pressed towards the lower arm 1560 to deform, such that the top sheet lip 1554 and the bottom sheet lip 1548 are clamped in the edging member 1528 and the internal space formed between the top sheet 1530 and the bottom sheet 1524 is sealed by the edging member 1528. The pressing or clamping process may be performed sequentially or simultaneously on the entire periphery of the composite table board. Further, referring to Fig. 4C, after the composite table board has been assembled, the upper surface of the upper arm 1562 of the edging member 1528 is coplanar with the upper surface of the top sheet 1530, and the arc 1564 is located at outer edges of the table board, such that the table board can have an aesthetic appearance and can be used more conveniently. The edging member 1528 and the reinforcement member 1526 may extend around the entire peripheral 1580 of the top sheet, to improve the rigidity of the table board. In a preferred embodiment, heat or adhesive may not be required when deforming or assembling the edging member 1528.

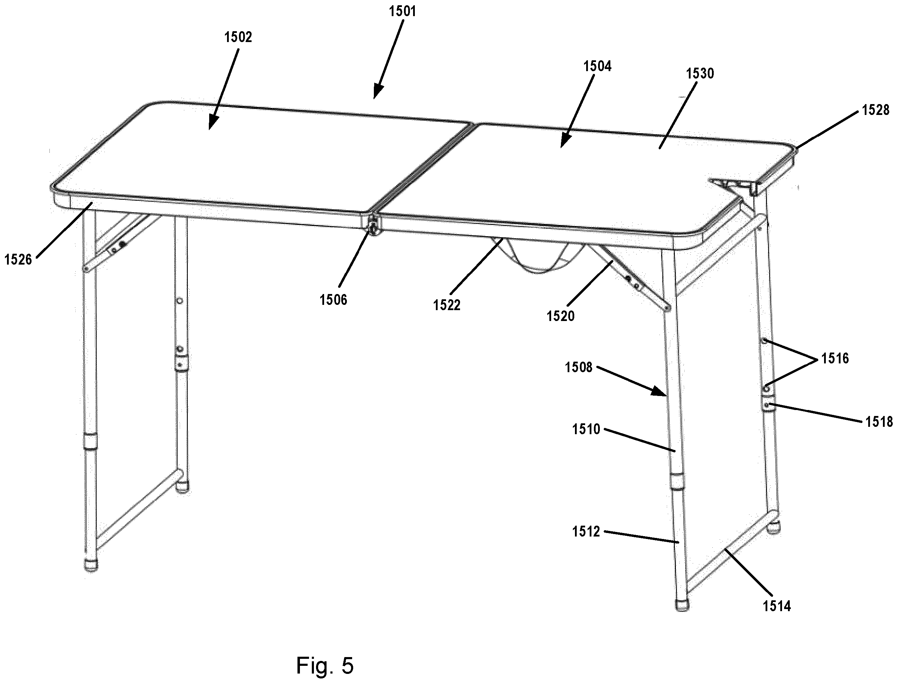

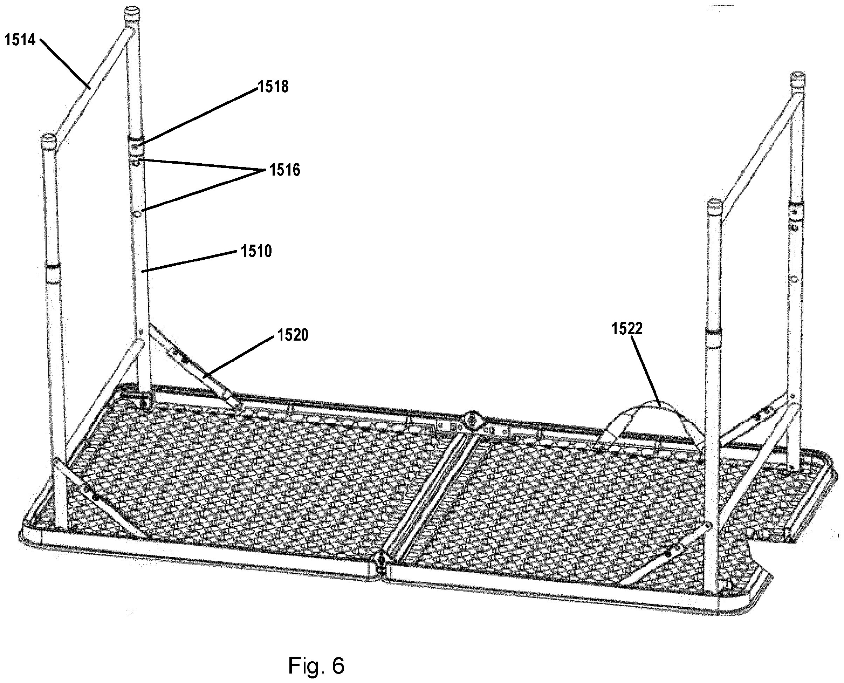

According to the present disclosure, there is further provided a table. Figs. 5 and 6 illustrate a table 1501 having foldable legs, each of which may be formed of metal components (e.g., aluminum). The table 1501 may include a first portion 1502 and a second portion 1504 pivotably connected via a hinge 1506, such that the table is foldable. The foldable leg assemblies 1508 are coupled to respective outer ends of the portions 1502 and 1504. More specifically, each of the foldable leg assemblies 1508 includes a pair of leg tubes 1510 which are pivotably connected to a shaft 1532 on the reinforcement member 1526. Insertion tubes 1512 are connected via a bracket 1514 and are configured to be inserted telescopically into the leg tubes 1510. Spring-loaded retention buttons 1518 may be selectively inserted into selected brake holes 1516 disposed in the leg tube 1510, to allow for adjustment of the height of the table 1501. When the insertion tube 1512 is fully inserted into the leg tube 1510, the table 1501 has a minimum height. And, the length of the foldable leg assembly is set such that the foldable leg assembly can be fully accommodate between the first portion 1502 and the second portion 1504 when the table is being folded. The first portion 1502 and the second portion 1504 can be folded in parallel to each other. Latch hinges 1520 are pivotably connected to the reinforcement member 1526 and each leg tube 1510, to lock the foldable leg assembly 1508 or hold the same in an extended position as shown in Fig. 5. Preferably, flexible bands 1522 may be provided for lift-up after the first portion 1502 and the second portion 1504 are folded, thus making the table portable.

The present disclosure further provides a method of manufacturing the composite table board as described above. As shown in Figs. 4A-4C, the method includes steps of:
placing a lower end of the tubular metal reinforcement member 1526 in the channel 1540 of the bottom sheet 1524;
placing the top sheet 1530 on a top of the tubular metal reinforcement member 1526 such that the lip 1554 of the top sheet engages the lip 1548 of the bottom sheet in parallel;
positioning the edging member 1528 around the lip of the top sheet and the lip of the bottom sheet such that the first arm 1560 of the edging member is located below the lip 1548 of the bottom sheet, and a second arm 1562 of the edging member is located above the lip 1554 of the top sheet;
compressing the first arm and the second arm towards each other to permanently deform the edging member, such that the edging member clamps the lip of the top sheet against the lip of the bottom sheet, and the edging member extends around an entire periphery of the composite board.

The method of manufacturing the composite table board according to a preferred embodiment of the present disclosure further includes a step of attaching the lip of the top sheet to the lip of the bottom sheet prior to the compressing step.

The protection scope of the present disclosure should be merely defined by the attached claims. Given the teaching of the present disclosure, those skilled in the art would readily realize that a substitute structure of the one disclosed herein may be used as a feasible substitute embodiment, and combine the embodiments disclosed herein to form new embodiments. Such embodiments also fall into the scope as defined by the appended claims.

## Claims

1. A composite board, comprising:
a bottom sheet having a bottom sheet channel formed along a periphery of the bottom sheet, wherein a bottom sheet lip is formed on a top of an outer wall of the bottom sheet channel, and the bottom sheet lip is perpendicular to the outer wall of the bottom sheet channel and extends outwards;
a top sheet having a top sheet lip formed along a periphery of the top sheet, the top sheet lip overlying the bottom sheet lip in parallel;
a reinforcement member located in the bottom sheet channel and engaging the top sheet; and
an edging member having a first arm and a second arm which are formed integrally, wherein the edging member extends substantially around an entire periphery of the composite board and clamps the bottom sheet lip and the top sheet lip together by the first arm and the second arm.

2. The composite board according to claim 1, wherein the reinforcement member is formed as a rectangular metal tube.

3. The composite board according to claim 1, wherein an upper surface of the top sheet lip is lower than an upper surface of the top sheet.

4. The composite board according to claim 3, wherein an upper surface of the first arm is coplanar with an upper surface of the composite board.

5. The composite board according to claim 1, wherein a stepped portion protruding downwards is formed on an outer side of at least a part of the bottom sheet channel.

6. The composite board according to claim 1, wherein a length (LL) of the top sheet lip and the bottom sheet lip is equal to a length of the first arm and the second arm.

7. The composite board according to claim 6, wherein a width of the reinforcement member is greater than the length (LL) of the top sheet lip and the bottom sheet lip.

8. The composite board according to claim 6, wherein a width of the stepped portion is equal to the length (LL) of the top sheet lip and the bottom sheet lip.

9. The composite board according to claim 1, wherein one or more ridges or protrusions are formed on opposing surfaces of the first arm and the second arm.

10. The composite board according to claim 1, wherein a pattern of protrusions is formed on the bottom sheet, an upper surface of each of the protrusions engages a lower surface of the top sheet.

11. The composite board according to claim 1, wherein the bottom sheet and the top sheet are formed of plastics, the reinforcement member and the edging member are formed of metal.

12. The composite board according to claim 11, wherein the edging member is formed of aluminum.

13. The composite board according to claim 11, wherein the protrusions of the bottom sheet are formed via a vacuum forming process.

14. A table, comprising:
a composite board, comprising:
a bottom sheet having a bottom sheet channel formed on a periphery of the bottom sheet, and a bottom sheet lip formed on a top of an outer wall of the bottom sheet channel, the bottom sheet lip being perpendicular to the outer wall of the bottom sheet channel and extending outwards;
a top sheet having a top sheet lip formed on a periphery of the top sheet, the top sheet lip overlying the bottom sheet lip in parallel;
a tubular metal reinforcement member having an lower end located in the bottom sheet channel and an upper end engaging the top sheet, an outer wall of the channel engaging a side of the tubular metal reinforcement member;
an edging member having a first arm and a second arm which are formed integrally, the edging member extending substantially around an entire periphery of the composite board and clamping the bottom sheet lip and the top sheet lip together by the first arm and the second arm; and
a table leg assembly pivotably coupled to the tubular metal reinforcement member.

15. A method of manufacturing a composite board, comprising steps of:
placing a lower end of a tubular metal reinforcement member into a channel of a bottom sheet;
placing a top sheet on a top of the tubular metal reinforcement member with a lip of the top sheet engages a lip of the bottom sheet in parallel;
positioning an edging member around the lip of the top sheet and the lip of the bottom sheet such that a first arm of the edging member is located below the lip of the bottom sheet, and a second arm of the edging member is located above the lip of the top sheet; and
compressing and permanently deforming the edging member by moving the first arm and the second arm towards each other, such that the edging member clamps the lip of the top sheet against the lip of the bottom sheet, and the edging member extends around an entire periphery of the composite board.

16. The method according to claim 15, further comprising a step of attaching the lip of the top sheet to the lip of the bottom sheet prior to the compressing step.
